(19) Europäisches Patentamt
European Patent Office
Office européen des brevets

(11) **EP 3 560 706 A1**

(12) **EUROPEAN PATENT APPLICATION**
published in accordance with Art. 153(4) EPC

(43) Date of publication:
**30.10.2019 Bulletin 2019/44**

(51) Int Cl.:
**B32B 27/20** (2006.01)   **B05D 5/06** (2006.01)
**B32B 15/08** (2006.01)

(21) Application number: **18744833.7**

(22) Date of filing: **23.01.2018**

(86) International application number:
**PCT/JP2018/001905**

(87) International publication number:
**WO 2018/139429 (02.08.2018 Gazette 2018/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **25.01.2017   JP 2017011271**

(71) Applicant: **Mazda Motor Corporation
Aki-gun
Hiroshima 730-8670 (JP)**

(72) Inventors:
• **YAMANE, Takakazu
Aki-gun
Hiroshima 730-8670 (JP)**
• **TERAMOTO, Kouji
Aki-gun
Hiroshima 730-8670 (JP)**
• **HIRANO, Fumi
Aki-gun
Hiroshima 730-8670 (JP)**
• **OKAMOTO, Keiichi
Aki-gun
Hiroshima 730-8670 (JP)**

(74) Representative: **Thoma, Michael
Lorenz Seidler Gossel
Rechtsanwälte Patentanwälte
Partnerschaft mbB
Widenmayerstraße 23
80538 München (DE)**

(54) **MULTILAYER COATING FILM AND COATED OBJECT**

(57)     A multilayer coating film includes a colored base layer 14 formed directly or indirectly on a surface of a coating target 11, and a luster material-containing layer 15 layered on the colored base layer 14 and containing flaked luster materials 22 and a colorant 23. With respect to the luster material-containing layer 15 in a state without the colorant, Y(10°) of the XYZ color system is set to be 50 or more and 850 or less, and Y(20°) is set to be equal to k × Y(10°), where k is in a range of 0.2 ≤ k ≤ 0.6 and is determined according to the Y(10°). The colorant concentration C of the luster material-containing layer is determined according to k. The surface reflectance R(%) of the colored base layer is determined according to the colorant concentration C of the luster material-containing layer and the Y(10°).

FIG.1

**Description**

TECHNICAL FIELD

The present invention relates to a multilayer coating film and a coated object.

BACKGROUND ART

Generally, it has been attempted to apply a plurality of coating films on top of each other on a base surface of an automobile body or another automobile component in order to improve protection and appearance of the base. For example, Patent Document 1 discloses: providing a deep color coat containing a deep color pigment (carbon black) on a coating target, which is a metal plate coated with a cationic electrodeposition coat and an intermediate coat; providing a metallic coat containing scale-like aluminum pigments on the surface of the deep color coat; and further providing a clear coat. The deep color coat having the lightness of N0 to N5 of the Munsell color chart, and the scale-like aluminum pigments having a thickness of 0.1 to 1 $\mu$m and an average particle size of 20 $\mu$m are used to obtain a multilayer coating film with significant flip-flop properties.

Patent Document 2 discloses a composition of a metallic coat containing three kinds of aluminum flake pigments A to C each having a different average particle size D50 and a different average thickness. The aluminum flake pigment A has the average particle size D50 of 13 to 40 $\mu$m, and the average thickness of 0.5 to 2.5 $\mu$m. The aluminum flake pigment B has the average particle size D50 of 13 to 40 $\mu$m, and the average thickness of 0.01 to 0.5 $\mu$m. The aluminum flake pigment C has the average particle size D50 of 4 to 13 $\mu$m, and the average thickness of 0.01 to 1.3 $\mu$m. The mass ratios of the solid content of the aluminum flake pigments A to C are set to be as follows: A/B is 10/90 to 90/10; and (A+B)/C is 90/10 to 30/70, and the solid content of (A+B+C) to 100 parts by mass of the solid content of resin is set to be 5 to 50 parts by mass. Such constituents are intended to improve the luminance, the flip-flop properties, and the hiding properties.

Patent Document 3 discloses obtaining a luster coating film which is luster and having electromagnetic wave permeability by providing, on a resin base, a coat which contains flat luster materials made of aluminum. The luster materials are oriented such that their flat surfaces lie along a coating film surface, and are arranged such that the average overlapping number y (which is an average number of the luster materials that intersect with one of orthogonal lines orthogonal to the coating film surface) and the average distance x (which is an average distance between adjacent luster materials in the direction of a same orthogonal line with which the adjacent luster materials intersect) satisfy a given relationship.

CITATION LIST

PATENT DOCUMENT

Patent Document 1: Japanese Unexamined Patent Publication No. H10-192776
Patent Document 2: Japanese Unexamined Patent Publication No. 2005-200519
Patent Document 3: Japanese Unexamined Patent Publication No. 2010-30075

SUMMARY OF THE INVENTION

TECHNICAL PROBLEM

It is the flip-flop properties (hereinafter referred to as the "FF properties") that give an effect of light and shade or metallic impression to a metallic coat provided, for example, on an automobile body. With the FF properties, the lightness of the coated object varies depending on an angle from which it is viewed. That is, with the FF properties, the lightness (i.e., highlights) and the darkness (i.e., shades) become more distinct. The FF properties are often expressed by a flop index (FI) value of X-Rite, Inc. However, the FI value obtained so far in metallic coatings is about 18, in general, and stunning, enhanced metallic impression has not been achieved yet.

Admittedly, the luster materials (e.g., aluminum flakes) oriented along the surface of the luster material-containing layer reduce scattered light from the luster materials and increase specular reflected light. As a result, the lightness of the highlights increases and the lightness of the shades decreases, which contributes to obtaining a greater FI value. However, too strong specular reflection on the luster material-containing layer due to control of the orientation of the luster materials may result in a phenomenon in which only a portion where the specular reflection occurs is luster (i.e.,

shining white). That is, it seems lusterest when viewed from the same angle as the angle of incidence, but the lightness suddenly decreases with the shift of the angle of view, when viewed even from near the specular reflection angle. In other words, the highlighted portion is seen only in a limited area (i.e., it does not seem that a relatively wide area on the surface is shining), which deteriorates the appearance.

Briefly saying, the FI value expresses the degree of lightness when viewed from near the specular reflection angle with reference to the lightness of the shades, and therefore, the FI value is small if the lightness is low when viewed from near the specular reflection angle. Scattering of light caused by luster materials may be enhanced to increase the lightness when viewed from near the specular reflection angle. However, such enhancement increases the lightness of shaded portions, as well. That means that significant FF properties cannot be achieved.

In view of the foregoing background, the present invention is intended to increase the FF properties and enhance the metallic impression in a metallic coating.

SOLUTION TO THE PROBLEM

The present invention controls the specular reflection properties of a luster material contained in a luster material-containing layer, and absorbs scattered light, scattered by the luster material, by a colorant in the luster material-containing layer and by a colored base layer.

A multilayer coating film disclosed herein includes a colored base layer containing a colorant and formed directly or indirectly on a surface of a coating target, and a luster material-containing layer containing flaked luster materials and a colorant and layered on the colored base layer, wherein a following equation is employed: $Y(20°) = k \times Y(10°)$, where k is a coefficient, Y represents a Y value according to an XYZ color system, which is calibrated by a standard white plate, of the luster material-containing layer in a state without the colorant, $Y(10°)$ represents a Y value of reflected light measured at a receiving angle of 10° (an angle toward a light source from a specular reflection angle), and $Y(20°)$ represents a Y value of reflected light measured at the receiving angle of 20°, and a colorant concentration C of the luster material-containing layer is expressed in percent by mass, the $Y(10°)$, the coefficient k, and the colorant concentration C are three variables, and satisfy, when x-, y-, and z-coordinate axes of a three-dimensional orthogonal coordinate space represent the three variables, that coordinates $(Y(10°), k, C)$ are in a range defined by a octahedron consisting of eight planes expressed by equations A to H, shown below, in which the planes expressed by the equations C and F form an inwardly protruding ridge and the planes expressed by the equations D and G form an outwardly protruding ridge:

$$\text{Equation A: } 3000y - 120z + 3000 = 0;$$

$$\text{Equation B: } 3000y - 120z = 0;$$

$$\text{Equation C: } 5x - 3750y - 2000 = 0;$$

$$\text{Equation D: } 5x - 3750y + 1000 = 0;$$

$$\text{Equation E: } 15000y - 9000 = 0;$$

$$\text{Equation F: } 5x - 1250y - 3000 = 0;$$

$$\text{Equation G: } 5x - 1250y = 0;$$

and

$$\text{Equation H: } 15000y - 3000 = 0,$$

and a surface reflectance R(%) of visible light of the colored base layer satisfies a condition represented by a following expression using the Y(10°) of and the colorant concentration C of the luster material-containing layer:

$$R \leq 0.6 \times C + 0.04 \times Y(10°) + 4.$$

The Y value of the XYZ color system is a stimulus value representing the lightness (the luminous reflectance). According to the above conditions, the Y(10°) and the coefficient k are in the ranges of $50 \leq Y(10°) \leq 850$ and $0.2 \leq k \leq 0.6$. This means, in short, that the lightness as viewed from near the specular reflection angle is high. Diffusion reflection of incident light at the edge of the luster material and scatter of the incident light on the surface of the luster material increase the lightness as viewed from near the specular reflection angle.

In this specification, the term "diffuse reflection" is used to describe a phenomenon in which incident light is reflected at various angles, and the term "scatter" is used to describe a phenomenon in which incident light is reflected at a different angle from the angle of the incident light.

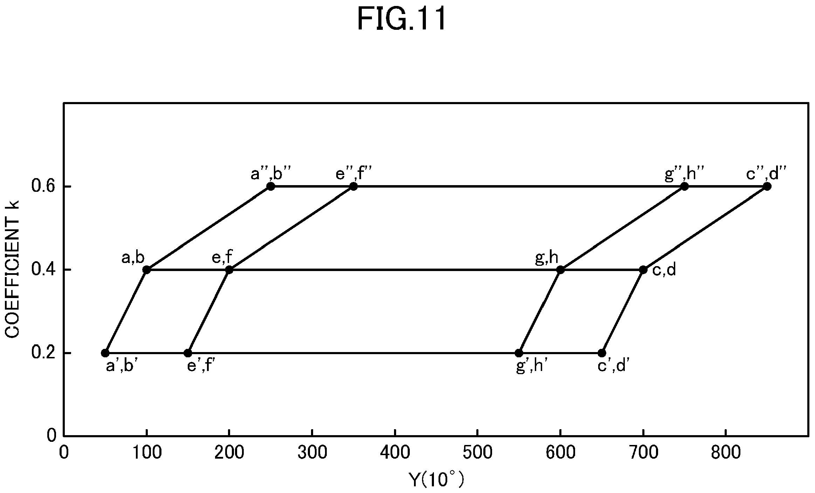

In order that a coated object advantageously has a surface shining effect in a relatively wide area of its surface and significant FF properties, the Y(20°), which is a Y value of a portion positioned at a greater inclined angle from the specular reflection angle toward the light source, and closer to the shades, is reduced by an appropriate decreasing rate (the coefficient k) depending on the Y(10°) (see FIG. 11). For example, according to conditions of the Y(10°), the k and the C, when Y(10°) is 100, the coefficient k is approximately 0.2 to 0.4, and hence the Y(20°) is 20 to 40. When Y(10°) is 400, the coefficient k is 0.2 to 0.6, and hence the Y(20°) is 80 to 240. When Y(10°) is 700, the coefficient k is 0.4 to 0.6, and hence the Y(20°) is 280 to 420.

In other words, in a case where the Y(10°) is relatively small, the coefficient k is set to be a smaller value, although only a slight reduction from Y(10°) to Y(20°) is possible, in order that the Y(20°) can be as small a value as possible to enhance the FF properties. On the other hand, in a case where the Y(10°) is relatively large, a small coefficient k results in an excessive change in the Y value. For example, when Y(10°) is 700, the coefficient k of 0.2 makes the Y(20°) 140 (that is, Y(20°) = 140). This means that the Y value changes greatly. In such a case, the lightness changes suddenly with a shift of the angle of view. To avoid this phenomenon, the coefficient k is set to be a large value in the case where the Y(10°) is relatively large.

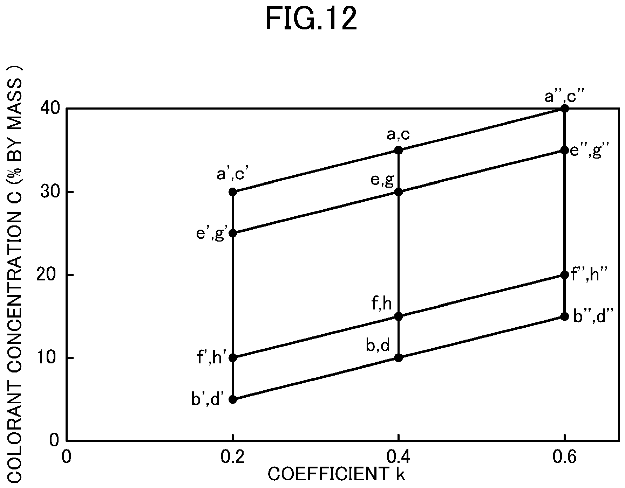

According to conditions of the Y(10°), the k and the C, the colorant concentration C (% by mass) of the luster material-containing layer is 5% by mass or more and 40% by mass or less. With an increase in the colorant concentration C, more diffuse reflected light by the luster material is absorbed by the colorant, so that FF becomes better. However, if the colorant concentration C becomes too high, the light reflected by the luster material is hidden, so that the desired color effect cannot be obtained. Further, the colorant concentration C (% by mass) varies depending on the coefficient k in the equation Y(20°) = k × Y(10°) (see FIG. 12). For example, when k is 0.2, C is in a range of $5 \leq C \leq 30$. When k is 0.4, C is in a range of $10 \leq C \leq 35$. When k is 0.6, C is in a range of $15 \leq C \leq 40$.

In other words, when the coefficient k is small, the colorant concentration C is small, and the larger the coefficient k becomes, the greater the colorant concentration C becomes. As mentioned earlier, if the coefficient k is small, the Y(10°) is relatively small. In such a case, less light is reflected as diffused light by the luster material (i.e., weak diffuse reflection). Thus, the absorption of the diffused light by the colorant is not so much required. For this reason, the colorant concentration C is set to be low. On the other hand, if the coefficient k is large, the Y(10°) is relatively large. In such a case, the diffuse reflection by the luster material is strong. Therefore, the colorant concentration C is set to be high so that the colorant absorbs the diffused light reflected by the luster material, that is, to enhance the FF properties.

The thus formed multilayer coating film, in which the Y(10°) is set to be a larger value and the Y value is reduced from Y(10°) to the Y(20°) as described above, advantageously has a "surface" shining effect in a wide area of its surface, as well as significant FF properties. That is, the light diffused or scattered by the luster material, particularly the scattered light reflected multiple times among a plurality of luster materials, is absorbed by the colorant contained in the luster material-containing layer. Further, the light which has reached the colored base layer through a gap between the luster materials is absorbed by the colorant contained in the colored base layer. The lightness of the shades can be reduced greatly by the light absorption effect by the colorant in the luster material-containing layer and the colored base layer, as well as by the above control on the degree of reduction of the Y value from Y(10°) to the Y(20°).

In other words, the lightness of the shades is easily adjusted by the colorant contained in the luster material-containing layer and by the colored base layer, due to the control on the degree of reduction of the Y value from Y(10°) to the Y(20°) as described above. This is advantageous in enhancing the FF properties.

Here, the surface reflectance R(%) of the colored base layer serving as an absorption layer of light satisfies the condition of "$R \leq 0.6 \times C + 0.04 \times Y(10°) + 4$". Next, with a decrease in the colorant of the luster material-containing layer, or with a decrease in Y(10°) of the luster material-containing layer, more light reaches the colored base layer through the luster material-containing layer. In this case, in order to decrease the lightness of the shades, it is necessary to increase the light absorption effect of the colored base layer. Therefore, the surface reflectance R is made proportional to the colorant concentration C and the Y(10°), such that the smaller the colorant concentration C becomes, or the smaller the Y(10°) becomes, the smaller the surface reflectance R becomes (better absorbing light).

Further, according to the above multilayer coating film, light is absorbed by the colored base layer, as described above. Therefore, it is not necessary to add a large amount of colorant to the luster material-containing layer to decrease the lightness of the shades. As a result, the luster material is oriented properly (i.e., the luster material is oriented to be parallel to the surface of the luster material-containing layer), and more light is incident on the luster material. This is advantageous in ensuring the lusterness and increasing the lightness of the highlights.

Preferably, aluminum flakes obtained by grinding aluminum foil, and moreover, aluminum flakes with improved surface smoothness, are employed as the luster material to increase the lusterness and enhance the metallic impression.

Preferably, such an aluminum flake has a particle size of 8 $\mu$m or more and 20 $\mu$m or less. If the particle size is smaller than 8 $\mu$m, the aluminum flakes are less likely to be oriented properly. If the particle size is larger than 20 $\mu$m, some of the aluminum flakes may stick out of the luster material-containing layer, and the corrosion resistance of the coating target may be reduced.

Preferably, the aluminum flake has a thickness of 25 nm or more and 200 nm or less. If the aluminum flake is too thin, more light passes through the flake, which affects adversely in increasing the lightness of the highlights. In addition, if the thickness of the aluminum flake is too thin with respect to its particle size, the aluminum flakes are easily deformed, which adversely affects the orientation of the aluminum flakes. In view of this point, the thickness of the aluminum flake is preferably 0.4% or more of its particle size, that is, 30 nm or more, for example. On the other hand, if the aluminum flake is excessively thick, the aluminum flakes are less likely to be oriented properly. In addition, such an aluminum flake increases the necessary volume ratio of the aluminum flakes in the luster material-containing layer to ensure the luster. The physical properties of the coating film are therefore deteriorated. In view of this point, the thickness of the aluminum flake is preferably 200 nm or less. More preferably, the aluminum flake has a thickness of 80 nm or more and 150 nm or less.

The surface roughness Ra of the aluminum flake is preferably 0.1 $\mu$m or less, and more preferably 0.09 $\mu$m or less to reduce diffuse reflection or scatter of the light. The surface roughness Ra is preferably 0.02 $\mu$m or more in order to prevent the reflection light from the aluminum flake from becoming excessively strong.

Preferably, the surface smoothness of the colored base layer is 8 or less in a measurement value Wd measured by WaveScan DOI (trade name) manufactured by BYK-Gardner. As a result, the luster material is oriented properly, which is advantageous in increasing the lightness of the highlights. More preferably, the surface smoothness of the colored base layer is 6 or less in the Wd. The surface roughness Ra of the colored base layer is preferably 5% or less of the particle size of the luster material (the particle size is preferably 8 $\mu$m or more and 20 $\mu$m or less).

Preferably, the luster material-containing layer has a thickness of 1.5 $\mu$m or more and 6 $\mu$m or less. As a result, the luster material is oriented properly, which is advantageous in increasing the lightness of the highlights. Preferably, the thickness of the luster material-containing layer is 20% or less of the particle size of the luster material (i.e., 1.5 $\mu$m or more and 4 $\mu$m or less). The thickness of the luster material-containing layer is set to be in this range to control the angle of orientation of the luster material (i.e., the angle formed between the surface of the luster material-containing layer and the luster material) by the thickness of the luster material-containing layer. The angle of orientation of the luster material decreases with a reduction in the thickness of the luster material-containing layer. The angle of orientation of the luster material is preferably 3 degrees or less, more preferably 2 degrees or less.

In one preferred embodiment, the colorants of the colored base layer and the luster material-containing layer are deep in color with a low visible light reflectance (the Munsell lightness is 5 or less), such as black and red, particularly a blackish color. As described earlier, according to the present invention, the lightness of the shades is reduced by the light absorption effect of the colored base layer. Thus, if a deep color colorant with a low visible light reflectance is employed as the colorant, such a colorant increases the FI value and is advantageous in enhancing the FF properties.

Both a pigment and a dye may be employed as the colorant. Further, two or more kinds of colorants which are mixed together (i.e., a mixed color) may be used.

In one preferred embodiment, the colorants of the colored base layer and the luster material-containing layer are in similar colors. The turbidity of the coating color is therefore reduced, which enhances the impression of density and depth, as well as the metallic impression.

In order that neutral colors are perceived as similar colors, it is desirable that a lightness difference between the neutral colors is 5.0 or less in a Munsell value. In order that chromatic colors are perceived as similar colors, it is desirable that if the hue of one of the chromatic colors is set as a reference (i.e., a zero position) in the Munsell hue circle divided into one hundred sectors, and the number of the one hundred sectors are increased to +50 in a counterclockwise direction and decreased to -50 in a clockwise direction from the reference position, the hue of the other chromatic color is in a range of ±10 from the reference position.

In one preferred embodiment, the colorants of the colored base layer and the luster material-containing layer are in a blackish color. As a result, a grayish color with a high FI value and enhanced metallic impression can be obtained.

In one preferred embodiment, a transparent clear layer is layered directly on the luster material-containing layer. The resistance to acids and scratches can be achieved by the transparent clear layer.

A coated object including the multilayer coating film provided on a coating target is, for example, an automobile body. The coated object may also be a body of a motorcycle or bodies of other vehicles, or may be other metal products or resin products.

ADVANTAGES OF THE INVENTION

According to the present invention, a luster material-containing layer, containing flaked luster materials and a colorant, is layered on a colored base layer containing a colorant. With respect to the luster material-containing layer in a state without the colorant, Y(10°) of the XYZ color system is set to be 50 or more and 850 or less, and Y(20°) is set to be equal to k × Y(10°), wherein k is in a range of $0.2 \leq k \leq 0.6$ and is determined according to the Y(10°). The colorant concentration C of the luster material-containing layer is determined according to the k value. The surface reflectance R (%) of the colored base layer is determined according to the colorant concentration C of the luster material-containing layer and the Y(10°). Thus, a coated object can have a "surface" shining effect in a relatively wide area of its surface and significant FF properties.

BRIEF DESCRIPTION OF THE DRAWINGS

FIG. 1 is a diagram schematically illustrating a cross-sectional view of a multilayered coating film.
FIG. 2 is a diagram schematically illustrating a cross-sectional view of a known multilayer coating film to show how light is scattered by luster materials and is diffused on a base layer.
FIG. 3 schematically shows the control of scattered light by a laminated coating film according to the present invention.
FIG. 4 is a diagram illustrating reflected light for explaining how to calculate an FI value.
FIG. 5 is a graph showing an example angle dependence of Y(10°) with respect to a luster material-containing layer in a state without a colorant.
FIG. 6 illustrates how a value Y is measured.
FIG. 7 is a graph showing a preferred range of Y(10°) and colorant concentration C at coefficient k = 0.4.
FIG. 8 is a graph showing a preferred range of Y(10°) and colorant concentration C at coefficient k = 0.2.
FIG. 9 is a graph showing a preferred range of Y(10°) and colorant concentration C at coefficient k = 0.6.
FIG. 10 is a graph showing a critical line of a surface reflectance R of a colored base layer.
FIG. 11 is a graph showing a relationship between the Y(10°) and the coefficient k.
FIG. 12 is a graph showing a relationship between the coefficient k and the colorant concentration C.
FIG. 13 is a graph showing ranges of the Y(10°), the coefficient k, and the colorant concentration C when an FI value is 30 or more.
FIG. 14 is a graph showing ranges of the Y(10°), the coefficient k, and the colorant concentration C when an FI value is 35 or more.

DESCRIPTION OF EMBODIMENTS

Hereinafter, embodiments of the present invention will now be described with reference to the accompanying drawings. The following description of the preferred embodiments is only an example in nature, and is not intended to limit the scope, applications, or use of the present invention.

<Example Configuration of Multilayered Coating Film>

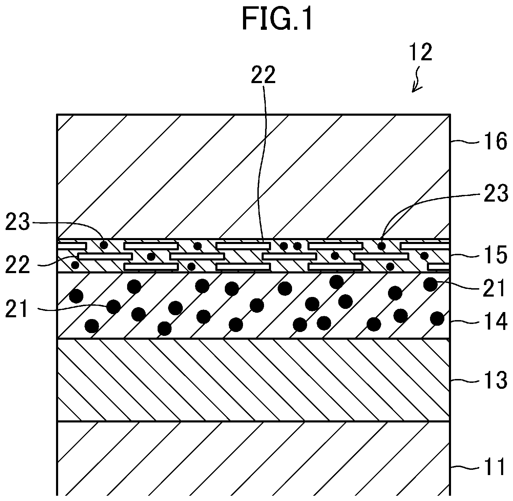

As illustrated in FIG. 1, a multilayer coating film 12 provided on a surface of an automobile body (steel plate) 11 according to the present embodiment contains a colored base layer 14, a luster material-containing layer 15, and a transparent clear layer 16 which are sequentially stacked one upon the other. An electrodeposition coating film (undercoat) 13 is formed on the surface of the automobile body 11 by cationic electrodeposition. The multilayer coating film 12 is provided on top of the electrodeposition coating film 13. In the multilayer coating film 12, the colored base layer 14 corresponds to an intermediate coat, and the luster material-containing layer 15 and the transparent clear layer 16 correspond to a topcoat.

A deep color pigment 21 is dispersed in the colored base layer 14. Flaked luster materials 22 and a deep color pigment 23 in a color similar to that of a pigment 21 of the colored base layer 14 are dispersed in the luster material-containing layer 15. Pigments of various hues including, for example, a black pigment (e.g., carbon black, perylene black, and aniline black) or a red pigment (e.g., perylene red) may be employed as the pigments 21 and 23. It is particularly preferable to employ as the pigment 21 carbon black having a particle size distribution with a peak at a particle size of 300 nm or more and 500 nm or less, and employ as pigment 23 carbon black having a particle size distribution with a peak at a particle size of 200 nm or less.

The surface smoothness of the colored base layer 14 is 8 or less in a measurement value Wd (wavelength of 3 to 10 mm) measured by WaveScan DOI (trade name) manufactured by BYK-Gardner, and the thickness of the luster material-containing layer 15 is 1.5 $\mu$m or more and 6 $\mu$m or less.

The luster material 22 of the luster material-containing layer 15 has a thickness of 25 nm or more and 200 nm or less, and is oriented approximately parallel to the surface of the luster material-containing layer 15. Specifically, the luster material 22 is oriented at an angle of 3 degrees or less with respect to the surface of the luster material-containing layer 15. After having applied a coating, which includes the luster material 22 and the pigment 23, on top of the colored base layer 14, a solvent included in the coating film is vaporized by stoving. As a result, the coating film shrinks in volume and becomes thin, and the luster material 22 is arranged at the orientation angle of 3 degrees or less (preferably 2 degree or less).

The colored base layer 14 contains a resin component which may be, e.g., a polyester-based resin. The luster material-containing layer 15 contains a resin component which may be, e.g., an acrylic-based resin. The colored base layer 16 contains a resin component which may be, e.g., an acid/epoxy-based cured acrylic resin.

<Control of Scattered Light, etc.>

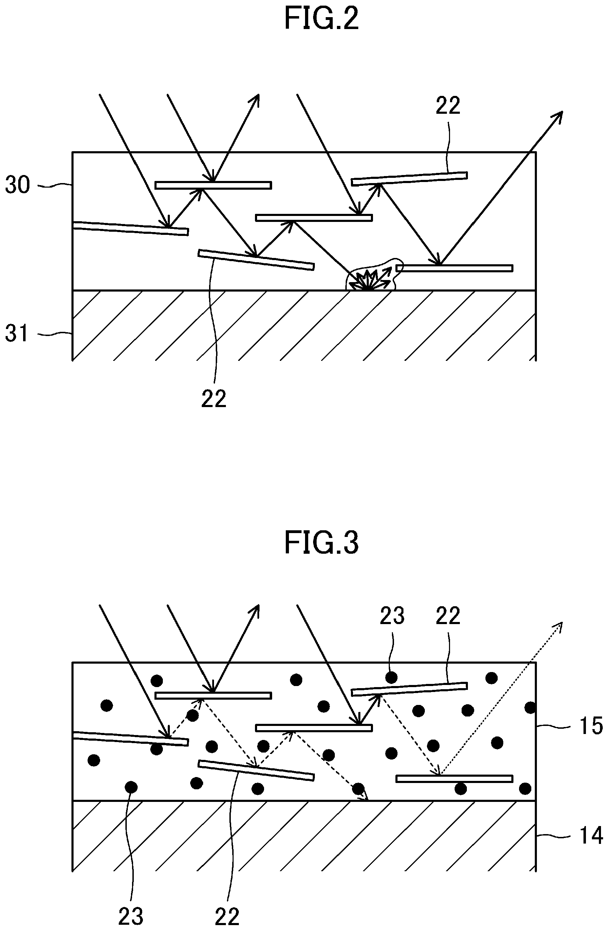

As illustrated in FIG. 2, if a large number of luster materials 22 are dispersed in the luster material-containing layer 30, light is reflected multiple times by the plurality of luster materials 22. The FI value is low if a large portion of the light undergoes multiple reflections and comes out of the luster material-containing layer 30 as scattered light at angles diverging from the specular reflection angle. That is, reducing the scattered light is important to increase the FI value. In addition, the light reaching a base layer 31 after the multiple reflections is diffused by the base layer 31 (i.e., diffuse reflection). The FI value is low if the diffuse reflection is strong. Thus, reducing the diffuse reflection by the base layer 31 is important to increase the FI value.

As illustrated in FIG. 3, the pigments 23 contained in the luster material-containing layer 15 contribute to increasing the FI value by absorbing the scattered light. The multiple reflections increase the optical path length. Due to the increased optical path length, light is more likely to be absorbed by the pigments 23. A greater FI value is obtained as a result. The broken-line arrows show that the pigments 23 reduce the intensity of the scattered light. Further, the scattered light which has reached the colored base layer 14 is absorbed by the colored base layer 14. That means the diffuse reflection is reduced. A greater FI value is obtained as a result.

A small area occupancy of the luster materials 22 reduces specular reflection of light by the luster materials 22, which affects adversely in increasing the FI value. On the other hand, a large area occupancy of the bight materials 22 increases the number of multiple reflections by the bight materials 22, which results in an increase in the scattered light and affects adversely in increasing the FI value.

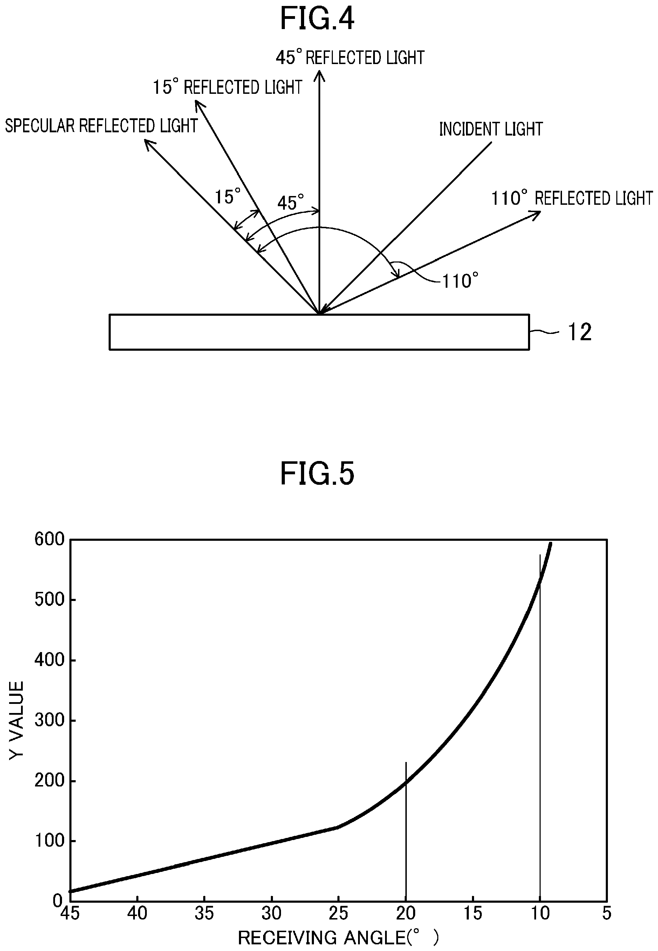

As illustrated in FIG. 4, the FI value is obtained from the equation shown below, wherein L*45° is a lightness index of reflected light (45° reflected light) that is angled 45 degrees from a specular reflection angle toward an angle of incident light, which is incident on a surface of the multilayer coating film 12 at a 45-degree angle from a normal to the surface, L*15° is a lightness index of reflected light (15° reflected light) that is angled 15 degrees from the specular reflection angle toward the angle of incident light, and L*110° is a lightness index of reflected light (110° reflected light) that is angled 110 degrees from the specular reflection angle toward the angle of incident light.

$$\mathrm{FI} = 2.69 \times (L*15° - L*110°)^{1.11}/L*45°^{0.86}$$

<Bright Material-Containing Layer>

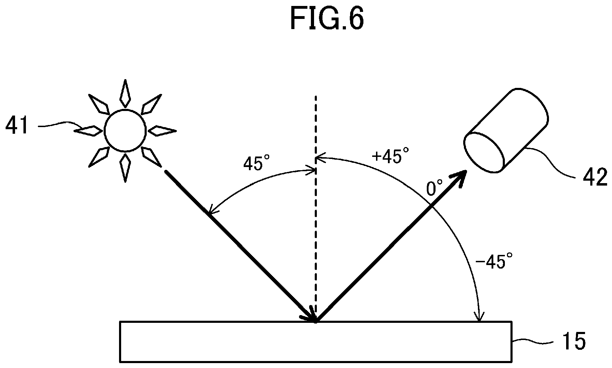

FIG. 5 illustrates example angle dependence of a Y value according to the XYZ color system, which is calibrated by a standard white plate, of the luster material-containing layer in a state without a colorant. FIG. 6 illustrates how to measure Y values. Light from a light source 41 is incident on the luster material-containing layer 15 at an angle of 45°. The receiving angle of a sensor 42 is defined such that the specular reflection angle is 0°. A three-dimensional gonio-spectrophotometric color measurement system GCMS-4 from Murakami Color Research Laboratory was used to measure the values. In the example illustrated in FIG. 5, Y(10°) is equal to 510 and Y(20°) is equal to 200, wherein Y(10°) represents a Y value of reflected light measured at a receiving angle of 10° (i.e., an angle toward the light source from the specular reflection angle), and Y(20°) represents a Y value of the reflected light measured at a receiving angle of 20°.

According to the present invention, the following expressions are used in order that the coated object has a "surface" shining effect in a relatively wide area of its surface and significant FF properties: $50 \leq Y(10°) \leq 850$ and $Y(20°) = k \times Y(10°)$, wherein $Y(10°)$, k, and a colorant concentration C (% by mass) of the luster material-containing layer satisfy a predetermined condition. Herein, k is a coefficient and satisfies $0.2 \leq k \leq 0.6$. Details will be described below.

<Determination of Preferable $Y(10°)$, Coefficient k, Colorant Concentration C, and Surface Reflectance R>

The FI value of each multilayer coating film of the samples 1-42 shown in Tables 1-3 was obtained. The multilayer coating film (its base is an electrodeposition coating film) has the luster material-containing layer and the colored base layer. The samples 1-42 are examples of the multilayer coating film that was colored gray. The extender pigment of the colored base layer was barium sulfate. The thickness of each colored base layer was 10 $\mu$m. After having employed a wet-on-wet method to apply coatings for the colored base layer and the luster material-containing layer, onto a steel product, the layers were stoved (heated at 140°C for 20 minutes).

[Table 1]

| | SAMPLE | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| BRIGHT MATERIAL CONTAINING LAYER | ACRYLIC RESIN (% by mass) | 27.7 | 27.7 | 29.1 | 29.1 | 27.5 | 27.5 | 34.8 | 34.8 | 33.5 | 33.5 | 35.1 | 35.1 | 30.1 | 32.5 |
| | CARBON (% by mass) | 34 | 11 | 29 | 16 | 36 | 9 | 34 | 11 | 29 | 16 | 36 | 9 | 22.5 | 22.5 |
| | MELAMINE RESIN (% by mass) | 10.8 | 10.8 | 11.3 | 11.3 | 10.7 | 10.7 | 13.6 | 13.6 | 13 | 13 | 13.6 | 13.6 | 11.7 | 12.6 |
| | ALUMINUM (% by mass) | 14.8 | 14.8 | 12.9 | 12.9 | 15.1 | 15.1 | 4.9 | 4.9 | 6.8 | 6.8 | 4.6 | 4.6 | 11.6 | 8.1 |
| | CHIPPING RESISTANCE AGENT (% by mass) | 4.5 | 3.6 | 4.3 | 3.8 | 4.6 | 3.5 | 4.5 | 3.6 | 4.3 | 3.8 | 4.6 | 3.5 | 4.1 | 4.1 |
| | ADDITIVE (% by mass) | 8.2 | 32.1 | 13.4 | 26.9 | 6.1 | 34.2 | 8.2 | 32.1 | 13.4 | 26.9 | 6.1 | 34.2 | 20.1 | 20.1 |
| | ALUMINUM PERTICLE SIZE ($\mu$m) | 10 | 10 | 10 | 10 | 10 | 10 | 10 | 10 | 10 | 10 | 10 | 10 | 10 | 10 |
| | ALUMINUM THICKNESS (nm) | 100 | 100 | 100 | 100 | 100 | 100 | 100 | 100 | 100 | 100 | 100 | 100 | 100 | 100 |
| | ALUMINUM SURFACE ROUGHNESS Ra ($\mu$m) | 0.09 | 0.09 | 0.06 | 0.06 | 0.11 | 0.11 | 0.02 | 0.02 | 0.03 | 0.03 | 0.01 | 0.01 | 0.05 | 0.04 |
| | CARBON SIZE (nm) | 100 | 100 | 100 | 100 | 100 | 100 | 100 | 100 | 100 | 100 | 100 | 100 | 100 | 100 |
| | LAYER THICKNESS ($\mu$m) | 3 | 3 | 3 | 3 | 3 | 3 | 3 | 3 | 3 | 3 | 3 | 3 | 3 | 3 |
| | Y(10) | 109 | 112 | 222 | 218 | 89 | 95 | 695 | 691 | 575 | 589 | 701 | 713 | 311 | 503 |
| | Y(20)=Y(10)×0.4 | 44 | 45 | 89 | 87 | 36 | 38 | 278 | 277 | 230 | 236 | 280 | 285 | 124 | 201 |
| COLORED BASE LAYER | ACRYLIC RESIN (% by mass) | 65.8 | 65.8 | 65.8 | 65.8 | 65.8 | 65.8 | 65.8 | 65.8 | 65.8 | 65.8 | 65.8 | 65.8 | 65.8 | 65.8 |
| | CARBON (% by mass) | 4.1 | 9.1 | 9.1 | 9.1 | 9.1 | 9.1 | 9.1 | 9.1 | 9.1 | 9.1 | 9.1 | 9.1 | 9.1 | 9.1 |
| | MELAMINE RESIN (% by mass) | 15.4 | 15.4 | 15.4 | 15.4 | 15.4 | 15.4 | 15.4 | 15.4 | 15.4 | 15.4 | 15.4 | 15.4 | 15.4 | 15.4 |
| | EXTENDER PIGMENT (% by mass) | 5.6 | 5.6 | 5.6 | 5.6 | 5.6 | 5.6 | 5.6 | 5.6 | 5.6 | 5.6 | 5.6 | 5.6 | 5.6 | 5.6 |
| | ADDITIVE (% by mass) | 4.1 | 4.1 | 4.1 | 4.1 | 4.1 | 4.1 | 4.1 | 4.1 | 4.1 | 4.1 | 4.1 | 4.1 | 4.1 | 4.1 |
| | LAYER THICKNESS ($\mu$m) | 10 | 10 | 10 | 10 | 10 | 10 | 10 | 10 | 10 | 10 | 10 | 10 | 10 | 10 |
| | SURFACE SMOOTHNESS Wd | 8 or less | 8 or less | 8 or less | 8 or less | 8 or less | 8 or less | 8 or less | 8 or less | 8 or less | 8 or less | 8 or less | 8 or less | 8 or less | 8 or less |
| | SURFACE REFLECTANCE R(%) | 28.1 | 13.6 | 13.6 | 13.6 | 13.6 | 13.6 | 13.6 | 13.6 | 13.6 | 13.6 | 13.6 | 13.6 | 13.6 | 13.6 |
| | FI | 30.8 | 31.2 | 36.8 | 35.7 | 29.5 | 29.4 | 30.5 | 31.8 | 36.2 | 36.8 | 28.5 | 29.3 | 40.2 | 41.1 |

[Table 2]

| | SAMPLE | 15 | 16 | 17 | 18 | 19 | 20 | 21 | 22 | 23 | 24 | 25 | 26 | 27 | 28 |
|---|---|---|---|---|---|---|---|---|---|---|---|---|---|---|---|
| BRIGHT MATERIAL CONTAINING LAYER | ACRYLIC RESIN (% by mass) | 27.1 | 27.1 | 28.5 | 28.5 | 26.9 | 26.9 | 34.2 | 34.2 | 33 | 33 | 34.5 | 34.5 | 29.4 | 31.9 |
| | CARBON (% by mass) | 29 | 6 | 23 | 12 | 31 | 4 | 29 | 6 | 23 | 12 | 31 | 4 | 17.5 | 17.5 |
| | MELAMINE RESIN (% by mass) | 10.5 | 10.5 | 11.1 | 11.1 | 10.4 | 10.4 | 13.3 | 13.3 | 12.8 | 12.8 | 13.4 | 1.34 | 11.4 | 12.4 |
| | ALUMINUM (% by mass) | 15.7 | 15.7 | 13.8 | 13.8 | 16 | 16 | 5.8 | 5.8 | 7.5 | 7.5 | 5.4 | 5.4 | 12.4 | 9 |
| | CHIPPING RESISTANCE AGENT (% by mass) | 4.3 | 3.4 | 4.1 | 3.7 | 4.4 | 3.4 | 4.3 | 3.4 | 4.1 | 3.7 | 4.4 | 3.4 | 3.9 | 3.9 |
| | ADDITIVE (% by mass) | 13.4 | 37.3 | 19.6 | 31 | 11.3 | 39.3 | 13.4 | 37.3 | 19.6 | 31 | 11.3 | 39.3 | 25.3 | 25.3 |
| | ALUMINUM PERTICLE SIZE ($\mu$m) | 9 | 9 | 9 | 9 | 9 | 9 | 9 | 9 | 9 | 9 | 9 | 9 | 9 | 9 |
| | ALUMINUM THICKNESS (nm) | 90 | 90 | 90 | 90 | 90 | 90 | 90 | 90 | 90 | 90 | 90 | 90 | 90 | 90 |
| | ALUMINUM SURFACE ROUGHNESS Ra ($\mu$m) | 0.09 | 0.09 | 0.06 | 0.06 | 0.11 | 0.11 | 0.02 | 0.02 | 0.03 | 0.03 | 0.01 | 0.01 | 0.05 | 0.04 |
| | CARBON SIZE (nm) | 80 | 80 | 80 | 80 | 80 | 80 | 80 | 80 | 80 | 80 | 80 | 80 | 80 | 80 |
| | LAYER THICKNESS ($\mu$m) | 3 | 3 | 3 | 3 | 3 | 3 | 3 | 3 | 3 | 3 | 3 | 3 | 3 | 3 |
| | Y(10) | 58 | 54 | 172 | 166 | 42 | 45 | 639 | 643 | 545 | 534 | 665 | 660 | 252 | 458 |
| | Y(20)=Y(10)×0.2 | 12 | 11 | 34 | 33 | 8 | 9 | 128 | 129 | 109 | 107 | 133 | 132 | 50 | 92 |
| COLORED BASE LAYER | ACRYLIC RESIN (% by mass) | 65.8 | 65.8 | 65.8 | 65.8 | 65.8 | 65.8 | 65.8 | 65.8 | 65.8 | 65.8 | 65.8 | 65.8 | 65.8 | 65.8 |
| | CARBON (% by mass) | 6.5 | 11 | 11 | 11 | 11 | 11 | 11 | 11 | 11 | 1 | 11 | 11 | 11 | 11 |
| | MELAMINE RESIN (% by mass) | 15.4 | 15.4 | 15.4 | 15.4 | 15.4 | 15.4 | 15.4 | 15.4 | 15.4 | 15.4 | 15.4 | 15.4 | 15.4 | 15.4 |
| | EXTENDER PIGMENT (% by mass) | 5.6 | 5.6 | 5.6 | 5.6 | 5.6 | 5.6 | 5.6 | 5.6 | 5.6 | 5.6 | 5.6 | 5.6 | 5.6 | 5.6 |
| | ADDITIVE (% by mass) | 6.7 | 2.2 | 2.2 | 2.2 | 2.2 | 2.2 | 2.2 | 2.2 | 2.2 | 2.2 | 2.2 | 2.2 | 2.2 | 2.2 |
| | LAYER THICKNESS ($\mu$m) | 10 | 10 | 10 | 10 | 10 | 10 | 10 | 10 | 10 | 10 | 10 | 10 | 10 | 10 |
| | SURFACE SMOOTHNESS Wd | 8 or less | 8 or less | 8 or less | 8 or less | 8 or less | 8 or less | 8 or less | 8 or less | 8 or less | 8 or less | 8 or less | 8 or less | 8 or less | 8 or less |
| | SURFACE REFLECTANCE R(%) | 21.3 | 8.2 | 8.2 | 8.2 | 8.2 | 8.2 | 8.2 | 8.2 | 8.2 | 8.2 | 8.2 | 8.2 | 8.2 | 8.2 |
| | FI | 31.2 | 30.5 | 36 | 35.4 | 27.8 | 28.1 | 30.6 | 32 | 36.5 | 36.1 | 28.1 | 28.6 | 37.2 | 38.4 |

[Table 3]

| | SAMPLE | 29 | 30 | 31 | 32 | 33 | 34 | 35 | 36 | 37 | 38 | 39 | 40 | 41 | 42 |
|---|---|---|---|---|---|---|---|---|---|---|---|---|---|---|---|
| BRIGHT MATERIAL CONTAINING LAYER | ACRYLIC RESIN (% by mass) | 29.6 | 29.6 | 30.9 | 30.9 | 29.3 | 29.3 | 36.7 | 36.7 | 35.3 | 35.3 | 36.9 | 36.9 | 31.9 | 34.4 |
| | CARBON (% by mass) | 39 | 16 | 33 | 22 | 41 | 14 | 39 | 16 | 33 | 22 | 41 | 14 | 27.5 | 27.5 |
| | MELAMINE RESIN (% by mass) | 11.5 | 11.5 | 12 | 12 | 11.4 | 11.4 | 14.3 | 14.3 | 13.7 | 13.7 | 14.4 | 14.4 | 12.4 | 13.4 |
| | ALUMINUM (% by mass) | 12.2 | 12.2 | 10.4 | 10.4 | 12.6 | 12.6 | 2.3 | 2.3 | 4.2 | 4.2 | 2 | 2 | 9 | 5.6 |
| | CHIPPING RESISTANCE AGENT(% by mass) | 4.7 | 3.8 | 4.5 | 4 | 4.8 | 3.7 | 4.7 | 3.8 | 4.5 | 4 | 4.8 | 3.7 | 4.2 | 4.2 |
| | ADDITIVE (% by mass) | 3 | 26.9 | 9.2 | 20.7 | 0.9 | 29 | 3 | 26.9 | 9.2 | 20.7 | 0.9 | 29 | 15 | 15 |
| | ALUMINUM PERTICLE SIZE (μm) | 12 | 12 | 12 | 12 | 12 | 12 | 12 | 12 | 12 | 12 | 12 | 12 | 12 | 12 |
| | ALUMINUM THICKNESS (nm) | 120 | 120 | 120 | 120 | 120 | 120 | 120 | 120 | 120 | 120 | 120 | 120 | 120 | 120 |
| | ALUMINUM SURFACE ROUGHNESS Ra(μm) | 0.09 | 0.09 | 0.06 | 0.06 | 0.11 | 0.11 | 0.02 | 0.02 | 0.03 | 0.03 | 0.01 | 0.01 | 0.05 | 0.04 |
| | CARBON SIZE (nm) | 150 | 150 | 150 | 150 | 150 | 150 | 150 | 150 | 150 | 150 | 150 | 150 | 150 | 150 |
| | LAYER THICKNESS (μm) | 3 | 3 | 3 | 3 | 3 | 3 | 3 | 3 | 3 | 3 | 3 | 3 | 3 | 3 |
| | Y(10) | 262 | 259 | 378 | 370 | 243 | 238 | 840 | 838 | 731 | 728 | 855 | 866 | 451 | 653 |
| | Y(20)=Y(10)×0.6 | 157 | 155 | 227 | 222 | 146 | 143 | 504 | 503 | 439 | 437 | 513 | 520 | 271 | 392 |
| COLORED BASE LAYER | ACRYLIC RESIN (% by mass) | 65.8 | 65.8 | 65.8 | 65.8 | 65.8 | 65.8 | 65.8 | 65.8 | 65.8 | 65.8 | 65.8 | 65.8 | 65.8 | 65.8 |
| | CARBON (% by mass) | 1 | 6.1 | 6.1 | 6.1 | 6.1 | 6.1 | 6.1 | 6.1 | 6.1 | 6.1 | 6.1 | 6.1 | 6.1 | 6.1 |
| | MELAMINE RESIN (% by mass) | 15.4 | 15.4 | 15.4 | 15.4 | 15.4 | 15.4 | 15.4 | 15.4 | 15.4 | 15.4 | 15.4 | 15.4 | 15.4 | 15.4 |
| | EXTENDER PIGMENT (% by mass) | 5.6 | 5.6 | 5.6 | 5.6 | 5.6 | 5.6 | 5.6 | 5.6 | 5.6 | 5.6 | 5.6 | 5.6 | 5.6 | 5.6 |
| | ADDITIVE (% by mass) | 12.2 | 7.1 | 7.1 | 7.1 | 7.1 | 7.1 | 7.1 | 7.1 | 7.1 | 7.1 | 7.1 | 7.1 | 7.1 | 7.1 |
| | LAYER THICKNESS (μm) | 10 | 10 | 10 | 10 | 10 | 10 | 10 | 10 | 10 | 10 | 10 | 10 | 10 | 10 |
| | SURFACE SMOOTHNESS Wd | 8 or less | 8 or less | 8 or less | 8 or less | 8 or less | 8 or less | 8 or less | 8 or less | 8 or less | 8 or less | 8 or less | 8 or less | 8 or less | 8 or less |
| | SURFACE REFLECTANCE R(%) | 37.1 | 22.5 | 22.5 | 22.5 | 22.5 | 22.5 | 22.5 | 22.5 | 22.5 | 22.5 | 22.5 | 22.5 | 22.5 | 22.5 |
| | FI | 31.5 | 30.9 | 35.5 | 36.1 | 28.6 | 29.1 | 31.4 | 30.2 | 35.6 | 35.1 | 29.3 | 28.7 | 37.1 | 36.8 |

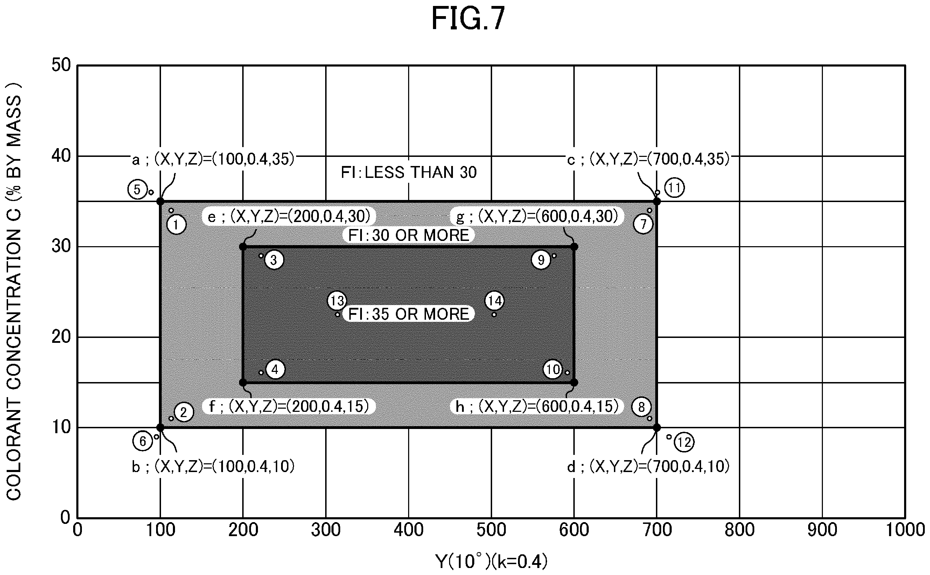

Analysis results are shown in FIGS. 7 to 9. In the figures, the plots with circled numbers indicate the sample numbers in Tables 1-3.

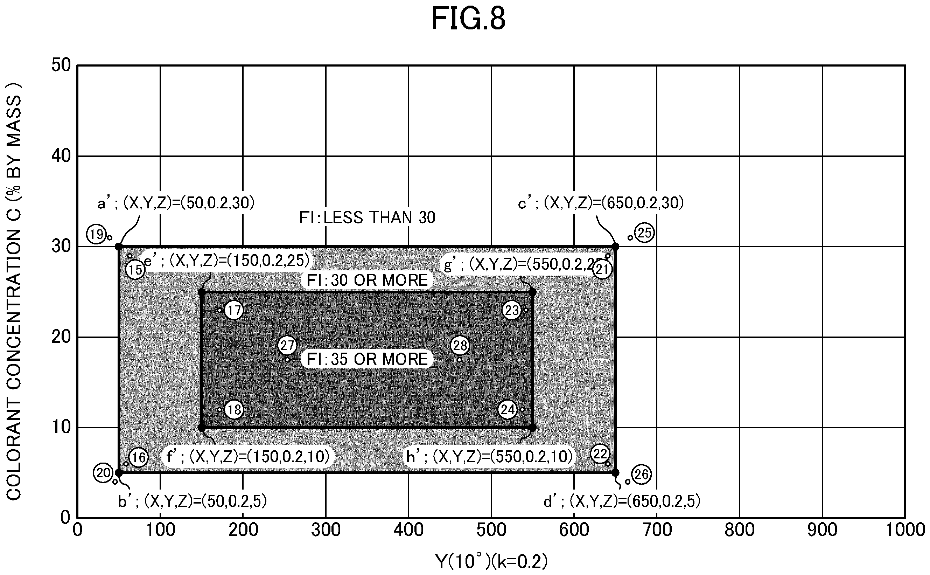

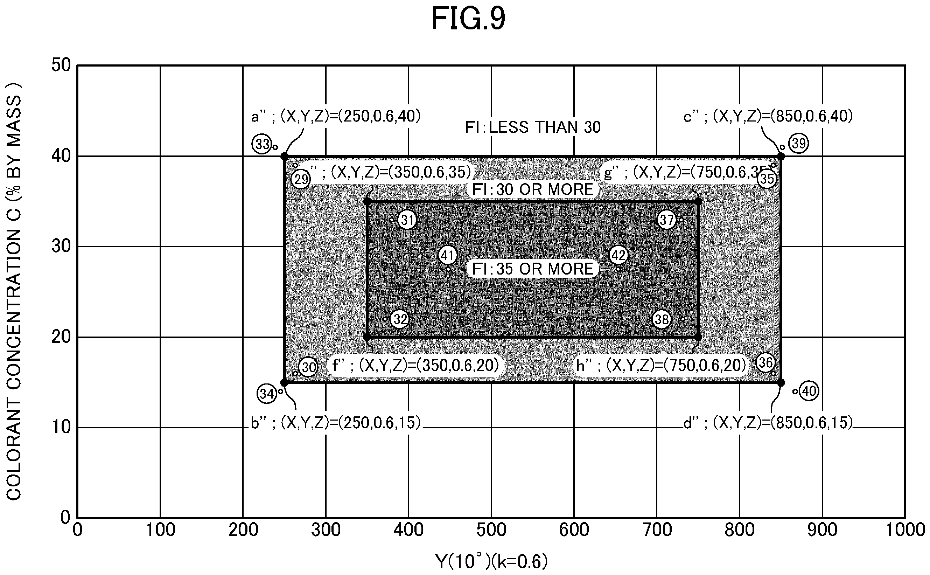

As illustrated in FIG. 7, regarding the luster material-containing layer, if k is 0.4, the FI value is 30 or more when $Y(10°)$ and C satisfy $100 \leq Y(10°) \leq 700$ and $10 \leq C \leq 35$. The FI value is 35 or more when $Y(10°)$ and C satisfy $200 \leq Y(10°) \leq 600$ and $15 \leq C \leq 30$. In FIG. 7, the coordinates (x, y, z) given to the vertexes a to h of figures showing suitable ranges (the range in which the FI is 30 or more and the range in which the FI is 35 or more) indicate the coordinates of a three-dimensional orthogonal coordinate space whose x-, y- and z-coordinate axes represent three variables $Y(10°)$, k and C, respectively. Regarding this coordinate, the coordinates (x, y, z) given to the vertexes a' to h', a" to h " of the figure showing the preferred range of FIGS. 8 and 9 (the range in which the FI is 30 or more and the range in which the FI is 35 or more) are also the same.

Similarly, as illustrated in FIG. 8, if k is 0.2, the FI value is 30 or more when $Y(10°)$ and C satisfy $50 \leq Y(10°) \leq 650$ and $5 \leq C \leq 30$. The FI value is 35 or more when $Y(10°)$ and C satisfy $150 \leq Y(10°) \leq 550$ and $10 \leq C \leq 25$.

Similarly, as illustrated in FIG. 9, if k is 0.6, the FI value is 30 or more when $Y(10°)$ and C satisfy $250 \leq Y(10°) \leq 850$ and $15 \leq C \leq 40$. The FI value is 35 or more when $Y(10°)$ and C satisfy $350 \leq Y(10°) \leq 750$ and $20 \leq C \leq 35$.

Next, regarding the surface reflectance R of the colored base layer, with a decrease in the colorant concentration C of the luster material-containing layer, or with a decrease in $Y(10°)$, more light reaches the colored base layer. In FIG. 7 where k = 0.4, when the luster material-containing layer has a configuration corresponding to the vertex b, the amount of light reaching the colored underlying layer is largest. Based on samples 1 and 2 arranged along the ab line connecting the vertexes a and b of FIG. 7, the surface reflectance R of the colored base layer required to obtain FI = 30 will be discussed.

As shown in Table 1, the surface reflectance R of sample 1 is 28.1%, and the surface reflectance R of sample 2 is 13.6%. Table 4 shows the FI values of the multilayer coating films of samples 1' and 2' in which the surface reflectance R is increased by changing the blending of the coloring base layer with respect to samples 1 and 2. Samples 1' and 2' are respectively the same as samples 1 and 2 except the blending ratio of the colored base layer. In each of samples 1' and 2', the surface reflectance R becomes less than 30 due to the increased surface reflectance R.

[Table 4]

| SAMPLE | 1 | 2 | 1' | 2' | 15 | 16 | 15' | 16' | 29 | 30 | 29' | 30' |
|---|---|---|---|---|---|---|---|---|---|---|---|---|
| ACRYLIC RESIN (% by mass) | 65.8 | 65.8 | 65.8 | 65.8 | 65.8 | 65.8 | 65.8 | 65.8 | 65.8 | 65.8 | 65.8 | 65.8 |
| CARBON (% by mass) | 4.1 | 9.1 | 3.6 | 8.5 | 6.5 | 11 | 5.3 | 10.1 | 1 | 6.1 | 0.2 | 5.6 |
| MELAMINE RESIN (% by mass) | 15.4 | 15.4 | 15.4 | 15.4 | 15.4 | 15.4 | 15.4 | 15.4 | 15.4 | 15.4 | 15.4 | 15.4 |
| EXTENDER PIGMENT (% by mass) | 5.6 | 5.6 | 5.6 | 5.6 | 5.6 | 5.6 | 5.6 | 5.6 | 5.6 | 5.6 | 5.6 | 5.6 |
| ADDITIVE (% by mass) | 9.1 | 4.1 | 9.6 | 4.7 | 6.7 | 2.2 | 7.9 | 3.1 | 12.2 | 7.1 | 13 | 7.6 |
| LAYER THICKNESS ($\mu$m) | 10 | 10 | 10 | 10 | 10 | 10 | 10 | 10 | 10 | 10 | 10 | 10 |
| SURFACE SMOOTHNESS Wd | 8 or less | 8 or less | 8 or less | 8 or less | 8 or less | 8 or less | 8 or less | 8 or less | 8 or less | 8 or less | 8 or less | 8 or less |
| SURFACE REFLECTANCE R (%) | 28.1 | 13.6 | 29.7 | 15.5 | 21.3 | 8.2 | 24.8 | 10.9 | 37.1 | 22.5 | 39.4 | 23.9 |
| FI | 30.8 | 31.2 | 28.5 | 28.9 | 31.2 | 30.5 | 28.2 | 28.4 | 31.5 | 30.9 | 29.2 | 29.1 |

COLORED BASE LAYER

Table 4 shows that the surface reflectance R of the colored base layer affects the FI value of the multilayer coating film.

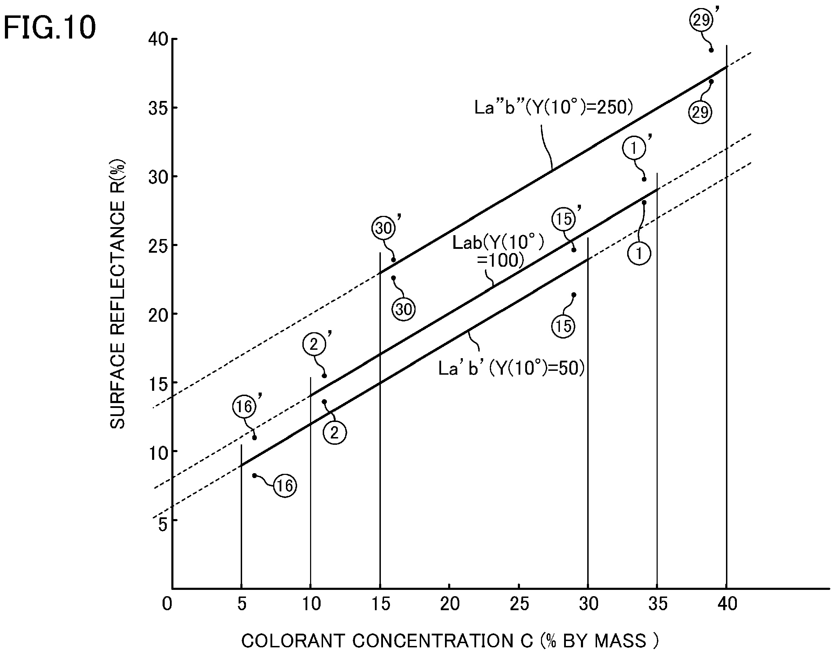

If samples 1, 2, 1' and 2' are plotted in the two-dimensional orthogonal coordinate system whose coordinate axes represent two variables, i.e., the colorant concentration C and the surface reflectance R, the plotted result is as shown in FIG. 10. The line Lab in the figure is a critical line of the surface reflectance R of the colored base layer, which is expected to have an FI value of 30 or more in the ab line, which is determined based on the surface reflectance R and the FI value of samples 1, 2, 1' and 2'.

Likewise, regarding the a'b' line of FIG. 8 where k = 0.2 and the a"b" line of FIG. 9 where k = 0.6, samples 15, 16, 15', and 16' and samples 29, 30, 29', and 30' shown in Table 4 and arranged along the lines are plotted in FIG. 10, and critical lines La'b' and La"b" of the surface reflectance R in which the FI value is expected to be equal to or greater than 30 are determined based on the surface reflectances R and the FI values of the samples.

According to FIG. 10, the inclination of the critical lines Lab, La'b', and La"b" of the surface reflectance R with respect to the colorant concentration C is 0.6. On the other hand, the intercept, which differs among these lines, depends on the difference of Y(10°) among these lines. Therefore, if $R = 0.6 \times C + \alpha \times Y(10°) + \beta$, and the R value and Y(10°) when C = 0 are substituted, $\alpha = 0.04$ and $\beta = 2$ are obtained.

Therefore, when the surface reflectance R satisfies the condition represented by the following expression, it is possible to obtain the FI value that is equal to or greater than 30.

$$R \le 0.6 \times C + 0.04 \times Y(10°) + 4$$

Here, the critical lines Lab, La'b', and La"b" shown in FIG. 10 correspond to the lines ab, a'b', and a"b" in FIGS. 7 to 9. The lines ab, a'b', and a"b" are the Y(10°) line with the largest amount of light reaching the colored base layer. When the Y(10°) becomes larger than the respective lines of ab, a'b' and a"b", less light reaches, so that the upper limit value of the surface reflectance R that can obtain the FI value of 30 or more is higher than that of each critical line shown in FIG. 10.

For example, when the Y(10°) is 500, the critical line $R_{500}$ of the surface reflectance R is as follows: $R_{500} = 0.6 \times C + 0.04 \times 500 + 4 = 0.6 \times C + 24$ When the Y(10°) is 500, if the surface reflectance does not exceed the critical line $R_{500}$, the FI value of 30 or more is obtained.

FIG. 11 illustrates a two-dimensional orthogonal coordinate system whose coordinate axes represent two variables, i.e., Y(10°) and the coefficient k. The vertexes a to h, a' to h', and a" to h" shown in FIGS. 7 to 9 are plotted to see the relationship between Y(10°) and the coefficient k. A suitable range of the coefficient k differs depending on Y(10°) as shown in the figure.

FIG. 12 illustrates a two-dimensional orthogonal coordinate system whose coordinate axes represent two variables, i.e., the coefficient k and the colorant concentration C. The vertexes a to h, a' to h', and a" to h" are plotted to see the relationship between the coefficient k and the colorant concentration C. A suitable range of the colorant concentration C differs depending on the coefficient k as shown in the figure.

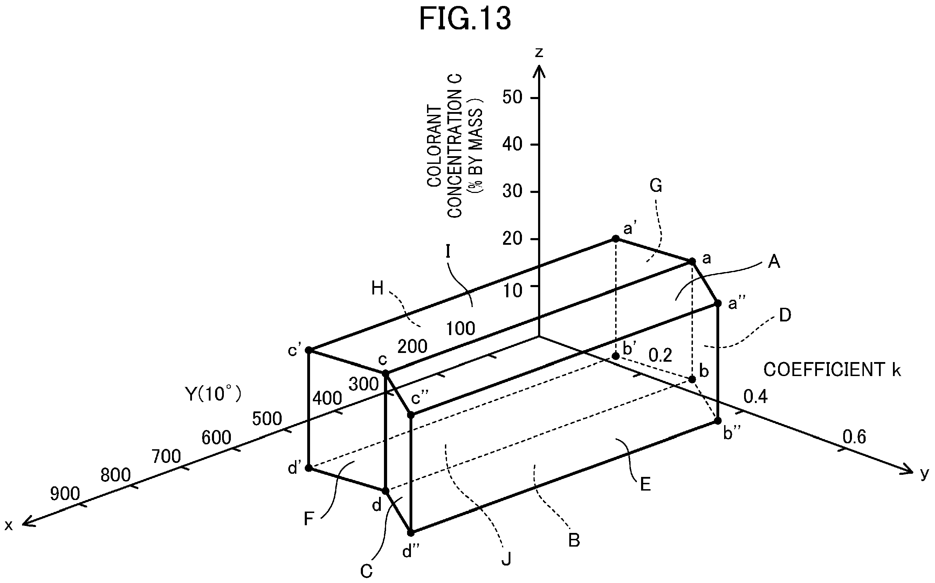

Thus, as illustrated in FIG. 13, ranges of Y(10°), the coefficient k, and the colorant concentration C at which the FI value is 30 or more can be expressed by the three-dimensional orthogonal coordinate space whose x-, y-, and z-coordinate axes represent the three variables Y(10°), k and C.

Specifically, the polyhedron shown in FIG. 13 is formed by the vertexes a to d, a' to d', and a" to d" plotted in the three-dimensional orthogonal coordinate space. The polyhedron consists of ten planes A to J in total, each including four vertexes shown in Table 1.

A plane expressed by the coordinates (x, y, z) of the three-dimensional orthogonal coordinate space can be expressed by the equation "$\alpha x + \beta y + \gamma z + \delta = 0$." The ten planes are expressed by the equations shown in Table 5.

[Table 5]

| Plane | Vertexes | Equation for Plane |
|---|---|---|
| A | (a, c, a", c") | A:3000y-120z+3000=0 |
| B | (b, d, b", d") | B:3000y-120z=0 |
| C | (c, d, c", d") | C:5x-3750y-2000=0 |
| D | (a, b, a", b") | D:5x-3750y+1000=0 |
| E | (a", c", b", d") | E:15000y-9000=0 |
| F | (c, d, c', d') | F:5x-1250y-3000=0 |
| G | (a, b, a', b') | G:5x-1250y=0 |
| H | (a', c', b', d') | H:15000y-3000=0 |
| I | (a, c, a', c') | A:3000v-120z+3000=0 |

(continued)

| Plane | Vertexes | Equation for Plane |
|---|---|---|
| J | (b, d, b', d') | B:3000y-120z=0 |

The planes A and I are expressed by the same equation, which means that these planes are the same plane. The planes B and J are expressed by the same equation, which means that these planes are the same plane. Thus, the polyhedron shown in FIG. 13 can be said to be an octahedron consisting of the eight planes A to H. The C and F planes of this octahedron form an inwardly protruding ridge, and the D and G planes form an outwardly protruding ridge.

Specifically, the polyhedron shown in FIG. 13 is an octahedron which consists of the eight planes expressed by the equations A to H listed in Table 1, wherein the planes expressed by the equations C and F form an inwardly protruding ridge, and the planes expressed by the equations D and G form an outwardly protruding ridge. The FI value is 30 or more if $Y(10°)$, the coefficient k, and the colorant concentration C satisfy that the coordinates $(Y(10°), k, C)$ are in the range defined by the octahedron.

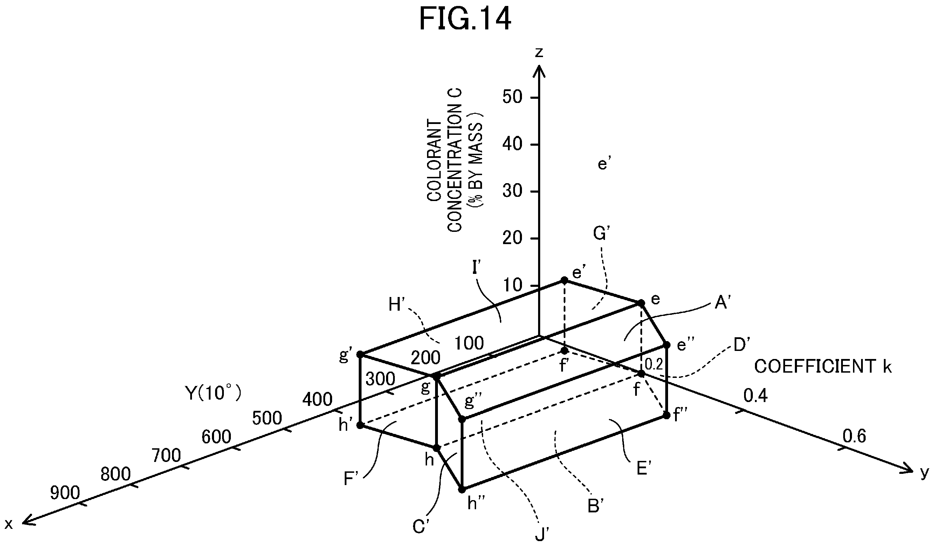

Similarly, as illustrated in FIG. 14, ranges of $Y(10°)$, the coefficient k, and the colorant concentration C at which the FI value is 35 or more can be expressed by the three-dimensional orthogonal coordinate space whose x-, y-, and z-coordinate axes represent the three variables $Y(10°)$, k and C. Specifically, this polyhedron is formed by the vertexes e to h, e' to h', and e" to h" plotted in the three-dimensional orthogonal coordinate space, and consists of ten planes A' to J' in total, each including four vertexes shown in Table 2. The ten planes are expressed by the equations shown in Table 6.

[Table 6]

| Plane | Vertexes | Equation for Plane |
|---|---|---|
| A' | (e, g, e", g") | A':2000y-80z+1600=0 |
| B' | (f, h, f', h") | B':2000y-80z+400=0 |
| C' | (g, h, g", h") | C':3x-2250y-900=0 |
| D' | (e, f, e", f") | D':3x-2250y+300=0 |
| E' | (e", g", f', h") | E':6000y-3600=0 |
| F' | (g, h, g', h') | F':3x-750y-1500=0 |
| G' | (e, f, e', f') | G':3x-750y-300=0 |
| H' | (e', g', f', h') | H':6000y-1200=0 |
| I' | (e, g, e', g') | A':2000y-80z+1600=0 |
| J' | (f, h, f', h') | B':2000y-80z+400=0 |

The planes A' and I' are expressed by the same equation, which means that these planes are the same plane. The planes B' and J' are expressed by the same equation, which means that these planes are the same plane. Thus, the polyhedron shown in FIG. 14 can be said to be an octahedron consisting of the eight planes A' to H'. The C' and F' planes of this octahedron form an inwardly protruding ridge, and the D' and G' planes form an outwardly protruding ridge.

Specifically, the polyhedron shown in FIG. 14 is an octahedron which consists of the eight planes expressed by the equations A' to H' listed in Table 2, wherein the planes expressed by the equations C' and F' form an inwardly protruding ridge, and the planes expressed by the equations D' and G' form an outwardly protruding ridge. The FI value is 35 or more if $Y(10°)$, the coefficient k, and the colorant concentration C satisfy that the coordinates $(Y(10°), k, C)$ are in the range defined by the octahedron.

If the $Y(10°)$, the coefficient k, and the colorant concentration C are determined such that the FI value is 30 or more, the luster material-containing layer containing a colorant has the $Y(10°)$ of about 50 to 200, both inclusive, and the coefficient k $(= Y(20°) / Y(10°))$ of about 0.1 to 0.4, both inclusive.

DESCRIPTION OF REFERENCE CHARACTERS

11    Automobile Body (Steel Plate)

12     Multilayer Coating Film
13     Electrodeposition Coating Film
14     Colored Base Layer
15     Bright Material-Containing Layer
16     Transparent Clear Layer
21     Pigment (Colorant)
22     Bright Material
23     Pigment (Colorant)

**Claims**

1. A multilayer coating film, comprising
a colored base layer containing a colorant and formed directly or indirectly on a surface of a coating target; and a luster material-containing layer containing flaked luster materials and a colorant and layered on the colored base layer, wherein
a following equation is employed: $Y(20°) = k \times Y(10°)$, where k is a coefficient,
Y represents a Y value according to an XYZ color system, which is calibrated by a standard white plate, of the luster material-containing layer in a state without the colorant,
$Y(10°)$ represents a Y value of reflected light measured at a receiving angle of 10° (an angle toward a light source from a specular reflection angle), and $Y(20°)$ represents a Y value of reflected light measured at the receiving angle of 20°, and a colorant concentration C of the luster material-containing layer is expressed in percent by mass, the $Y(10°)$, the coefficient k, and the colorant concentration C are three variables, and satisfy, when x-, y-, and z-coordinate axes of a three-dimensional orthogonal coordinate space represent the three variables, that coordinates $(Y(10°), k, C)$ are in a range defined by a octahedron consisting of eight planes expressed by equations A to H, shown below, in which the planes expressed by the equations C and F form an inwardly protruding ridge and the planes expressed by the equations D and G form an outwardly protruding ridge:

$$\text{Equation A: } 3000y - 120z + 3000 = 0;$$

$$\text{Equation B: } 3000y - 120z = 0;$$

$$\text{Equation C: } 5x - 3750y - 2000 = 0;$$

$$\text{Equation D: } 5x - 3750y + 1000 = 0;$$

$$\text{Equation E: } 15000y - 9000 = 0;$$

$$\text{Equation F: } 5x - 1250y - 3000 = 0;$$

$$\text{Equation G: } 5x - 1250y = 0;$$

and

$$\text{Equation H: } 15000y - 3000 = 0,$$

and
a surface reflectance R(%) of visible light of the colored base layer satisfies a condition represented by a following expression using the $Y(10°)$ of and the colorant concentration C of the luster material-containing layer:

$$R \le 0.6 \times C + 0.04 \times Y(10°) + 4.$$

2.  The multilayer coating film of claim 1, wherein
    the luster materials are aluminum flakes with a thickness of 25 nm or more and 200 nm or less.

3.  The multilayer coating film of claim 2, wherein
    the aluminum flakes are oriented at an angle of 3 degrees or less with respect to a surface of the luster material-containing layer.

4.  The multilayer coating film of any one of claims 1 to 3, wherein
    the colorants of the colored base layer and the luster material-containing layer are deep in color.

5.  The multilayer coating film of claim 4, wherein
    the colorants of the colored base layer and the luster material-containing layer are in similar colors.

6.  The multilayer coating film of claim 5, wherein
    the colorants of the colored base layer and the luster material-containing layer are in a blackish color.

7.  The multilayer coating film of any one of claims 1 to 6, wherein
    a transparent clear layer is layered directly on the luster material-containing layer.

8.  A coated object including the multilayered coating film of any one of claims 1 to 7.

# FIG.1

# FIG.2

# FIG.3

# FIG.4

45° REFLECTED LIGHT

15° REFLECTED LIGHT

SPECULAR REFLECTED LIGHT

INCIDENT LIGHT

110° REFLECTED LIGHT

15°  45°

110°

12

# FIG.5

EP 3 560 706 A1

# FIG.6

21

# FIG.7

EP 3 560 706 A1

# FIG.8

COLORANT CONCENTRATION C (% BY MASS)

Y(10°)(k=0.2)

a' ; (X,Y,Z)=(50,0.2,30)
c' ; (X,Y,Z)=(650,0.2,30)
FI:LESS THAN 30
e' ; (X,Y,Z)=(150,0.2,25)
g' ; (X,Y,Z)=(550,0.2,25)
FI:30 OR MORE
FI:35 OR MORE
f' ; (X,Y,Z)=(150,0.2,10)
h' ; (X,Y,Z)=(550,0.2,10)
b' ; (X,Y,Z)=(50,0.2,5)
d' ; (X,Y,Z)=(650,0.2,5)

# FIG.9

# FIG.10

EP 3 560 706 A1

# FIG.11

EP 3 560 706 A1

FIG.12

# FIG.13

EP 3 560 706 A1

# FIG.14

## INTERNATIONAL SEARCH REPORT

| | International application No. |
|---|---|
| | PCT/JP2018/001905 |

A. CLASSIFICATION OF SUBJECT MATTER
Int.Cl. B32B27/20(2006.01)i, B05D5/06(2006.01)i, B32B15/08(2006.01)i

According to International Patent Classification (IPC) or to both national classification and IPC

B. FIELDS SEARCHED

Minimum documentation searched (classification system followed by classification symbols)
Int.Cl. B32B1/00-43/00, B05D1/00-7/26

Documentation searched other than minimum documentation to the extent that such documents are included in the fields searched
| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2017/006529 A1 (MAZDA MOTOR CORP.) 12 January 2017, claims & JP 2017-19146 A | 1-8 |
| A | WO 2016/088294 A1 (MAZDA MOTOR CORP.) 09 June 2016, claims & US 2017/0218206 A1, claims & JP 2016-107427 A & MX 2017003779 A | 1-8 |
| A | JP 2005-144338 A (KANSAI PAINT CO., LTD.) 09 June 2005, claims (Family: none) | 1-8 |

☒ Further documents are listed in the continuation of Box C. ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April 2018 (20.04.2018) | 01 May 2018 (01.05.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/001905

C (Continuation).　DOCUMENTS CONSIDERED TO BE RELEVANT

| Category* | Citation of document, with indication, where appropriate, of the relevant passages | Relevant to claim No. |
|---|---|---|
| A | JP 2011-20021 A (KANSAI PAINT CO., LTD.) 03 February 2011, claims (Family: none) | 1-8 |
| A | JP 2012-11302 A (NIPPON PAINT CO., LTD.) 19 January 2012, claims (Family: none) | 1-8 |
| A | JP 2013-169507 A (KANSAI PAINT CO., LTD.) 02 September 2013, claims (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10192776 B
- JP 2005200519 A
- JP 2010030075 A